# EUROPEAN PATENT SPECIFICATION

(11) **EP 1 901 840 B1**
(45) Date of publication and mention of the grant of the patent: **14.05.2014**
(21) Application number: 06751467.9
(22) Date of filing: 25.04.2006
(51) Int. Cl.: B01J 19/24, B01J 19/00, B01J 10/02

(54) **VERTICAL STAGED POLYMERIZATION REACTOR**
VERTIKAL GESTUFTER POLYMERISATIONSREAKTOR
REACTEUR DE POLYMERISATION A ETAGES VERTICAL

(30) Priority: 05.05.2005 US 122965
(43) Date of publication of application: 26.03.2008
(73) Proprietor: EASTMAN CHEMICAL COMPANY, Kingsport, TN 37660 (US)
(72) Inventor: WINDES, Larry Cates, Kingsport, TN 37664 (US); MURDOCH, William Speight, Kingsport, TN 376633370 (US); YOUNT, Thomas Lloyd, Kingsport, Tennessee 37664 (US); SCHERRER, Paul Keith, Johnson City, TN 37604 (US); BONNER, Richard Gill, Lexington, SC 29072 (US); SLAUGHTER, Christopher Scott, 100 North Eastman Road Kingsport, TN 37660-5075 (US)
(74) Representative: Wibbelmann, Jobst
(86) International application number: PCT/US2006/015770
(87) International publication number: WO 2006/121615

(56) References cited:
- EP-A- 0 885 912
- WO-A-2005/044417
- DE-A1- 2 041 122
- FR-A- 2 152 765
- US-A- 3 841 836
- US-A1- 2002 092 625

## Description

### BACKGROUND OF THE INVENTION

### 1. Field of the Invention

The present invention relates to an apparatus for the production of polycondensation products, such as linear polyesters and co-polyesters. More particularly, the present invention relates to improved tray designs for use in vertical oriented polymerization reactors.

### 2. Background Art

Processes for producing polymeric materials such as polyesters and co-polyesters via polycondensation reactions involve the liberation of by-products as the polymeric functional groups of the molecules react with one another to produce longer molecular chain molecules. Typically, the extraction of these liberated byproduct molecules from the reaction mixture is necessary in order to drive the molecular build-up of the polymer. If the by-product compounds were not removed, chemical equilibrium will inhibit the length of the formed polymeric chain. In many of these polycondensation reaction systems the preferred method for extracting the liberated by-product is to vaporize the by-product out of the reaction mixture.

Various reactor designs and multi-step reaction systems have been designed and operated to facilitate the vaporization of by-products and the associated production of polycondensation materials. The most economical design for such polycondensation reactions (at least for the production of low to moderate molecular weight polymeric materials) is a series of stirred tank reactors. In these reactor systems large quantities of materials can be produced through the use of mechanical agitation, thermosiphon reboilers, and/or simple bubble agitation to enhance heat transfer and liquid-vapor surface area renewal. Unfortunately, the viscosity of the polymeric melts increase dramatically as the degree of polymerization ("DP") increases. Accordingly, because of the practical limitations of agitator designs, the high viscosity of these materials greatly decreases the capability of renewing the liquid-vapor surfaces and hence decreases the mass transfer efficiency of the stirred tank reactor.

In addition to the short comings set forth above, other operating parameters may also be restricted in the polycondensation process. For example, higher temperatures may be desirable to increase reaction kinetics and volatility of reaction by-products. Higher volatility of the by-products decreases by-product concentration in the reaction mixture, thereby furthering the polymerization reaction. However, the temperature sensitivity of the polymeric material to degradation reactions limits the use of increasingly higher temperature as a means of furthering the degree of polymerization. Similarly, the volatility of the by-products may be further increased by the use of low operating pressures. However, use of extremely low operating pressures is limited by the cost of achieving low operating pressures and the amount of reactor vapor space needed to prevent entrainment of polymer into the vacuum source. Moreover, the depth of the polymeric pool can inhibit the effective use of the reaction volume in low-pressure polycondensation reactors. Specifically, excessive depth of the reaction mixture increases the diffusion and convection paths that volatile byproducts must travel before escaping. Furthermore, as the depth of the polymeric pool increases, the deeper portions of the pool are subjected to greater hydrostatic pressure. Higher local pressures within the liquid inhibit the formation of by-product bubbles, which hinders the liberation of the by-products and hence the effective use of the reaction volume for furthering polymerization.

For the reasons set forth above, increasing the degree of polymerization requires replacement of simple stirred tank reactors with specialized reaction equipment. Such specialized equipment must overcome one or more of the operating limitations noted above to achieve the desired degree of polymerization. Currently, there are two fundamental approaches for enhanced liquid-vapor surface renewal that are best described as the dynamic approach and the static approach.

The first approach might be termed the dynamic approach in that it involves the use of moving mechanical devices to enhance liquid-vapor surface renewal. As noted above, enhanced liquid-vapor surface renewal facilitates the liberation of the by-products. With the dynamic approach, seals are needed around the rotating shaft or shafts that pass through the reactor walls. These seals must be maintained in order to prevent air from leaking into the reactor. Also with the dynamic approach, as the size of the vessel and the viscosity of the product increase, the size of the mechanical components must increase in order to handle the increase in load. The second approach can be referred to as the static approach in that no moving devices are used for the liquid-vapor surface renewal. This later approach uses gravity in combination with vertical drop to create thin polymeric films. Typically, such polymeric films flow between trays during the vertical drop. The thin polymeric films combined with shearing and surface turnover effects created by vertical falling films drive the polymerization reaction by enhancing the liberation of by-products.

Prior art patents which disclose the use of gravity in combination with vertical drop include: U.S. Patent Nos. 5,464,590 (the '590 patent), 5,466,419 (the '419 patent), 4,196,168 (the '168 patent), 3,841,836 (the '836 patent), 3,250,747 (the '747 patent), and 2,645,607 (the '607 patent). Early tray designs used vertically spaced circular trays (full circle in combination with hollow circle, and segmented circular) that utilized most of the cross-sectional area of the vessel. These circular tray reactors use a large portion of the available pressure vessel's horizontal cross-section for liquid hold-up. In some designs, a circular tray was followed by a hollow circle tray thus forming a disc-and-doughnut arrangement. Thus polymer flowed over a circular edge as it passed from tray to tray. The liberated gas by product thus flowed through circular and annular openings. In other designs, the trays were segmented to provide a straight edge for the polymer to flow over before dropping to the next tray. The segmented tray design also provided open area between the straight edge over which polymer flowed and the vessel wall through which the gas by-product could pass. With both designs however, the vaporized by-products from the trays was forced to flow through the same space as the polymer melt flow. To address this concern, the diameter of the circular trays was made somewhat less than the reactor vessel's diameter. The resulting annular space was used to allow vapor traffic to escape each tray and travel to the reactor vessel's vapor discharge nozzle along a path external to the path of the polymer flow. A shortcoming of the simple circular tray designs is the existence of dead zones (very slow moving or stagnant regions on the trays). The polymer in these stagnant regions tends .to overcook, become excessively viscous, cross-link and/or degrade, and as a result slowly solidify. The net result is a loss of effective reaction volume.

The next generation of designers changed the shape of the trays from circular to other geometric shapes. They eliminated dead zones, which are not entirely effective as reaction volume. The elimination of dead zones also improved product quality since the dead zones are regions that produce high levels of degradation by-products and poor color due to the overcooking of the polymer. Unfortunately, these noncircular shaped trays did not increase the effective use of the cylindrical pressure vessel's cross-sectional area.

The basis for more recent inventions of the '590 patent and the '419 patent is a hollow circular tray which more efficiently utilizes the cross-sectional area of a cylindrical pressure vessel while providing polymer melt flow paths which minimize liquid dead zone regions and prevent channeling. The net result was an approximate 40 % increase in tray area available for liquid retention as compared to the non-circular shaped trays. The central opening in the trays provided a chimney through which the vapor by-products are removed.

However, as set forth above, the depth of the polymeric pools can also inhibit the effective use of the reaction volume at low operating pressures. At a given operating pressure (vacuum level), the impact of polymer depth increases in proportion to the degree of polymerization.. This is due to reduction of the chemical equilibrium driving force for polymerization as the concentration of polymer end groups are reduced through the growth of the polymer chains. Hence, to get acceptable results, the mechanisms for liberating polycondensation by-products from the polymer melt must be further enhanced. At higher degrees of polymerization this is necessary so that sufficiently low levels of by-products remain in the melt enabling the polymerization to proceed efficiently. However, another important factor is that the viscosity increases substantially as polymerization proceeds to higher degrees of polymerization.

At a sufficiently high viscosity, horizontal trays cannot achieve the desired combination of both high polymer throughput and shallow polymer depths. The designs of Lewis et al. (the 168 patent) achieve a degree of control over the polymer depth by having the polymer flow down sloping trays. The slopes of the successive trays are increased to account for the expected increasing viscosity of the polymer as it polymerizes along its course. In the present invention described herein, substantially vertical surfaces are desirable for polymer systems with higher throughputs, and even higher viscosities, because of the reduced film thickness through which the liberated gas must pass.

The design of the '168 patent (roof-and-trough trays) also achieved some degree of control over polymer depth by splitting the polymer melt into two equal streams (with one flow path being a mirror image of the other flow path) that traverse from the top to the bottom of the reactor over sloped trays. Lewis' design innovation over simple sloped trays was a reduction of the reactor vessel volume needed to enclose the trays within a vacuum environment. By splitting the polymer flow the vertical dimension (vertical drop) needed for a tray to achieve a desired slope and hence a desired polymer depth was reduced. The roof-and-trough configuration cuts the horizontal length of the tray that each half of the polymer flow must traverse before dropping to the next tray. Since each half of the polymer flow traverses half the horizontal distance, the residence time for each is approximately the same as a simple sloped tray while using less total vertical height.

As the production rates are increased, the roof and-trough design concept can be extended by splitting the polymer streams into more equal streams, generally in binary fashion - two, four, eight... Thus, good utilization of the reactor vessel volume is maintained as the vessel is increased in size to accommodate the polymer throughput.

However, even with the roof-and-trough tray design of Lewis, utilization of the reactor vessel volume decreases as the desired degree of polymerization is pushed higher and/or the mass transfer versus residence time operating window is narrowed to achieve better quality. As the targeted degree of polymerization is pushed higher, the polymer viscosity increases, thus to maintain the same polymer depth requirements steeper tray slopes are required. Similarly, if mass transfer is to be increased by targeting shallow polymer depths, then steeper trays are needed. At some point the slopes become essentially vertical (greater than 60° slope from the horizontal), and appreciably thinner depths for a given combination of throughput and viscosity cannot be achieved by further changing the slope. In this region of high throughputs, targeted shallow depths, and high viscosity, the film generation and film support structures of the present invention described herein increase the number of polymer sheets within a given reactor vessel cross-sectional area, thereby achieving high throughputs and better mass transfer.

French patent application 2 152 765 discloses a vertical reactor for continuous production of polyterephthalate ethylen. The reactor comprises a vertical shaft 4 which traverses the entire height of the reactor. The shaft 4 has extruder portions 10. The helicoids of extruder portions located below and above the compartment 7 are right- and left-handed respectively, so as to press the viscous polyterephthalate ethylen into the compartment 7. Under the force of this pressure the viscous fluid escapes the compartment 7 and comes into contact with vertical plates 5 located below.

Patent application US 2002/0092625 A1 describes an apparatus for carrying out mass transfer processes with high-viscosity liquids. The apparatus comprises a vertically arranged vessel with feeder means and wire loops, along which the liquid runs off under the action of gravity.

Patent application EP 0 885 912 A1 discloses a polycarbonate. For the production of this polycarbonate, the use of two wire-wetting fall polymerizers 108A and 108B is suggested. The polymerizers 108 comprise vertical wires 103, which are secured at the upper end to a supporting rod. In the course of production, the polymerizable material falls along and in contact with the wires 103.

Patent application DE 2 041 122 A1 provides a device for organochemical reactions. Elongated built-in components 10 extend inside a reactor along the full height of the reactor. Wires, rods and tubes are disclosed as the elongated built-in components. In the course of production, a reactant is fed through an injector 9 to the elongated built-in component.

Patent US 3,841,836 provides a method and apparatus for the production of condensation polymers having a predetermined final viscosity. The apparatus comprises variable sloped surfaces 46. The slope of the variable sloped surfaces 46 is continuously adjusted to control the polyester flow over the variable sloped surfaces 46 so as to produce a polyester having a predetermined final viscosity.

Patent application EP 1 671 999 A1 provides a method of producing a specific polymer out of a prepolymer by discharging the prepolymer from holes of a perforated plate and polymerising the prepolymer under reduced pressure, while allowing the prepolymer to fall along the surface of a support that is open towards the outside.

Patent application EP 1 095 960 A1 discloses a system for producing a polycondensation polymer comprising an inert gas absorption device for causing a molten polycondensation prepolymer to absorb an inert gas, a polymerizer device for polymerizing the molten polycondensation prepolymer under reduced pressure, and a pipe for transferring the molten prepolymer from the absorption device to the polymerizer device.

Accordingly, there is a need for improved designs for film generation and film support in polycondensation reactors that makes more efficient utilization of space in a vertical, gravity flow driven polymerization reactor for combinations of high viscosity, high throughput, and thin films.

### SUMMARY OF THE INVENTION

The present invention overcomes one or more problems of the prior art by providing a vertically disposed polymerisation reactor according to claim 1. In one embodiment the reactor comprises a bundle assembly of static internal components for a vertical, gravity flow driven polymerization reactor for combinations of high viscosity, high throughput, and thin polymer melt films. The present invention is an enhancement of earlier designs that also used the approach of gravity and vertical drop to achieve the desired degree of polymerization. Such earlier designs are disclosed in U.S. Pat. No. 5,464,590 (the '590 patent), U.S. Pat. No. 5,466,419 (the '419 patent), U.S. Pat. No. 4,196,168 (the '168 patent), U.S. Pat. No. 3,841,836 (the '836 patent), U.S. Pat. No. 3,250,747 (the '747 patent), and U.S. Pat. No. 2,645,607 (the '607 patent). The present invention provides large surface areas over which the liquid is in contact with the atmosphere of the reactor while still attaining sufficient liquid holdup times for the polymerization to take place, by means of the novel components within what will be termed 'the bundle assembly'. The reactor vessel provides a means for controlling both the pressure and temperature in the space surrounding the bundle assembly.

The bundle assembly of the invention includes one or more stationary film generators. The bundle assembly further includes one or more stationary arrays of film support structures, wherein arrays are separated by film generators. Typically, each array of film support structures is arranged in one or more rows characterized by all of the film support structures within a row being at the same elevation (i. e. , height). According to the vertical arrangement of the components in the bundle assembly within a reactor vessel, the polymeric melt cascades down the vertical length of the vessel interior.

The film generator is any device that subdivides a flowing polymer stream into two or more independently flowing streams with a resultant increase in the number of free surfaces. By dividing the polymer melt, it can be more uniformly applied to the film support structures located below it. Furthermore, the film generators create large amounts of free surface area for the flowing polymer streams, which are retained and\or extended by the film support structures.

The array of film support structures provides solid surfaces upon which the polymer streams from the film generator flow. Each of the film support structures has a first side and a second side. A portion of each subdivided polymer stream flows over the first side, and a second portion of the subdivided polymer stream flows over the second side. In this manner, the film support structure is coated with flowing polymer. The film support structures are usually oriented at least 60 degrees, and preferably about 90 degrees, from the horizontal plane. A row of film support structures can be created in a number of ways. For example, a row can be formed by mounting at an equal elevation a plurality of horizontally spaced planar film support structures. For such an array, the linear or normal spacing between the planes of adjacent film support structures is preferably constant for a given row. Alternatively, a row can be formed by arranging the film support structures about a substantially vertical line. For this latter case, the angular spacing between adjacent film support structures is preferably constant within a given row. The film support structures are not required to be planar. For example, an array of film support structures can be created from a series of concentric cylinders or ellipses. In another variation, an array can be created by spiraling the film support structure about a vertical line.

Optionally, multiple film generators and arrays of film support structures are vertically arranged to form the bundle assembly. The vertically arranged rows of film support structures typically have a highest positioned row, a lowest positioned row, and optionally one or more intermediately positioned rows. In turn, each row includes one or more film support structures that are positioned such that when the polymeric melt contacts a film support structure the polymeric melt moves in a downward direction under the force of gravity. The arrangement of the rows is such that each row (except the lowest row) transfers the polymeric melt to a lower vertically adjacent film generator or row of film support structures. The presence of a film generator between rows of film support structures facilitates changing the number, orientation, or shape of the surfaces of the film support structures from one row to the subsequent lower row.

### BRIEF DESCRIPTION OF THE DRAWINGS

FIGURE 1 is a cross-sectional view of the bundle assembly of one embodiment of the present invention showing film generators and parallel film support structures;
FIGURE 2A shows the polymer melt flow for the bundle assembly of Figure 1;
FIGURE 2B shows in greater detail the polymer melt films from the film generator on both sides of a film support structure;
FIGURE 3A is a cross-sectional view of the top edge of a planar film support structure and the film generator above it where the film generator utilizes a half pipe to divide the melt flow, create the films and then direct the films onto the appropriately spaced film support structures.
FIGURE 3B is a cross-sectional view of the top edge of a planar film support structure and the film generator above it where the film generator utilizes equal leg angles to divide the melt flow, create the films and then direct the films onto the appropriately spaced film support structures;
FIGURE 4A is a perspective view of a framed solid plate used as a film support structure in a variation of the invention;
FIGURE 4B is a perspective view of a framed meshed screening used as a film support structure in a variation of the invention;
FIGURE 4C is a perspective view of a framed set of vertical and parallel wires or rods that are used as a film support structure in a variation of the invention;
FIGURE 5A is a perspective view of a row of film support structures utilizing planar surfaces with equal angular spacing;
FIGURE 5B is a perspective view of a film generator positioned over the film support structures of Figure 5A;
FIGURE 6A is a perspective view of a row of film support structures utilizing concentric cylinders;
FIGURE 6B is a perspective view of a film generator positioned over the film support structures of Figure 6A;
FIGURE 6C is a perspective view of a film support structure utilizing a spiral arrangement;
FIGURE 6D is a perspective view of a film generator positioned over the film support structures of Figure 6C;
FIGURE 7A is a perspective view of a row of framed parallel solid plate film support structures in a mounting rack;
FIGURE 7B is a perspective view of a row of meshed screen or perforated metal sheet for the film support structures in a mounting rack ;
FIGURE 7C is a perspective view of a row of framed set of wires, rods or tubes for the film support structures in a mounting rack;
FIGURE 8A is a perspective view illustrating the stacking of film generators and racks (rows) of film support structures to form a bundle assembly, with each rack holding the same type of film support structures;
FIGURE 8B is a perspective view illustrating the stacking of film generators and racks (rows) of film support structures to form a bundle assembly, with each rack holding a different type of film support structure; and
FIGURE 9 is a side view of a polymerization reactor composed of a vessel which encloses the bundle assembly of the present invention.

### DETAILED DESCRIPTION OF THE PREFERRED EMBODIMENT(S)

Reference will now be made in detail to the presently preferred compositions or embodiments and methods of the invention, which constitute the best modes of practicing the invention presently known to the inventors.

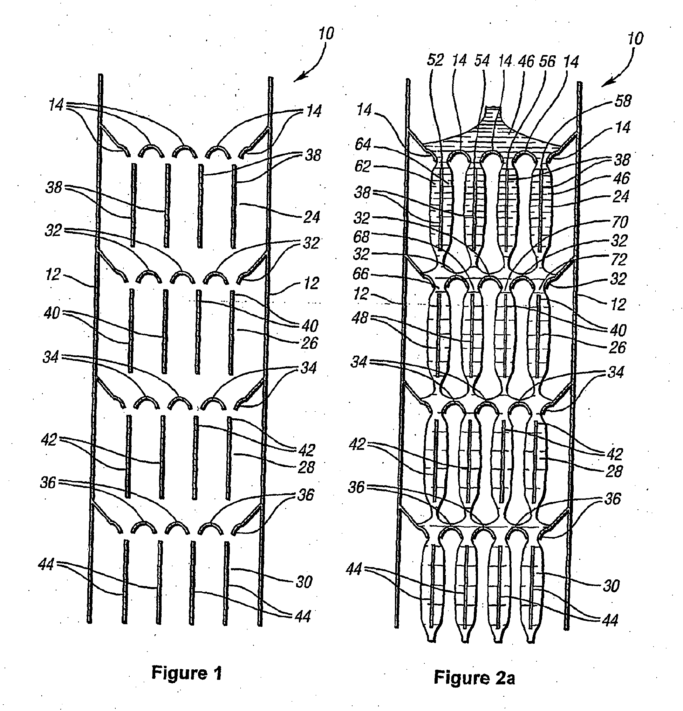

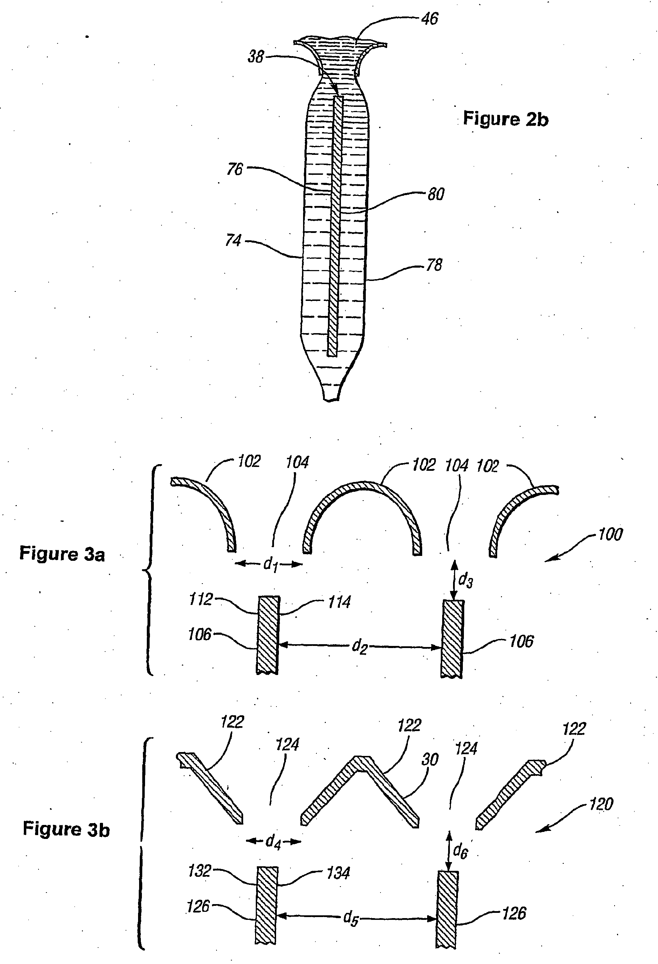

In an embodiment of the present invention, a bundle assembly adapted to be placed in a reactor for polymerizing a polymeric melt is provided. With reference to Figures 1 and 2, cross-sectional schematics of one embodiment of the bundle assembly of the present invention with and without polymeric melts are provided. Bundle assembly 10 includes support structure 12. Bundle assembly 10 also includes a stationary film generator 14 followed by stationary array 24 of vertical film support structures. Typically, stationary array 24 is a row of vertical film support structures positioned at a substantially equal elevation (i.e., height). Moreover, the array and film generator are referred to as stationary because they do not move during operation. The term "film support structures" as used herein means an object having a first and second surface over which a polymer melt can flow. Bundle assembly 10 will also optionally include one or more additional arrays (e.g. rows) 26, 28, 30 of film support structures and one or more additional rows of stationary film generators 32, 34, 36. When additional arrays 26, 28, 30 are present, array 24 is the highest array and array 30 is the lowest array. Each of arrays 24-30 includes one or more film support structures. In one variation, each of arrays 24-30 includes a plurality of film support structures 38, 40, 42, 44. In each of arrays 24-30, the plurality of film support structures 38, 40, 42, 44 are oriented to have successive horizontally-spaced substantially vertical surfaces with consistent clearance. "Consistent clearance" as used in this context means that the film support structures are separated by a sufficient distance to prevent adjacent polymer free surfaces from merging and to avoid the resulting loss in the free surface area of polymer melt 46. In one variation, these horizontally-spaced surfaces are also substantially parallel.

Typically, each of film support structures 38, 40, 42, 44 are substantially vertical with an angle equal to or greater than about 60 degrees between each film support structure and a horizontal plane. In a variation of the invention, each film support structure of the plurality of film support structures 38, 40, 42, 44 is substantially vertical with an angle equal to or greater than about 80 degrees between each film support structure and a horizontal plane. In another variation of the invention, each film support structure of the plurality of film support structures 38, 40, 42, 44 is substantially vertical with an angle from about 80 to preferably about 90 degrees between each film support structure and a horizontal plane. In yet another variation of the invention, each film support structure of the plurality of film support structures 38, 40, 42, 44 is substantially vertical with an angle of about 90 degrees between each film support structure and a horizontal plane. Each film support structure of the plurality of film support structures 38-44 are positioned such that when polymeric melt 46 contacts a films support structure of the plurality of film support structures 38-44, polymeric melt 46 moves in a downward direction under the force of gravity. Moreover, when additional arrays 26, 28, 30 are present, each array of vertically arranged arrays 24, 26, 28 transfer polymeric melt 46 to a lower vertically adjacent array.

The parallel arrangement of the surfaces of the film support structures in Figure 1 has a uniform linear or normal spacing between the surfaces in a row. Alternatively, the surfaces can be arranged about a vertical line such that they have a uniform angular spacing such that when viewed from above the film support structures appear much like the spokes of a wheel. Furthermore, the surfaces of the film support structures 38, 40, 42, 44 do not have to be planar. They can be any shape and orientation in which there is a consistent clearance between surfaces of adjacent film support structures. Thus, film support structures composed of flat plates, concentric shapes such as cylinders, and spiraling surfaces are all included within the scope of this invention. For the purpose of illustration, rectangular flat parallel support surfaces are shown in Figures 1, 2, 3, 4, 7, 8, and 9.

With reference to Figures 2A and 2B, cross-sectional schematics that illustrate the flow of polymer melt 46 is provided, including a polymer pool above the film generator, multiple polymer streams from the film generator, with the resulting polymer films on parallel film support structures. Polymer melt 46 is introduced at the top of bundle assembly 10, first entering the inlet film generator 14 that divides the flow into flow streams 52, 54, 56, 58 which flow onto each film support structure of the plurality of film support structures 38. The flow of polymer melt 46 then proceeds in a similar manner along sides 62, 64 of each film support structure of the plurality of film support structures 38. Polymer melt 46 flows down under the force of gravity until reaching the bottom of the plurality of film support structures 38. Polymer melt 46 then proceeds to film generator 32 which divides the flow into flow streams 66, 68, 70, 72. This process proceeds in a similar manner for the plurality of film support structures 40, 42, 44 and any additional arrays of film support structures that may be present until the bottom of bundle assembly 10 is reached. Each film support structure of arrays 24-30 is positioned such that when polymer melt 46 is flowed through bundle assembly 10 both sides of the film support structures 38-44 are used. For example as shown in Figure 2B, first portion 74 of polymer melt 46 flows over first side 76 of film support structure 38 under the force of gravity and second portion 78 of polymer melt 46 flows over second side 80 of film support structure 38 under the force of gravity. Finally, within a single row of film support structures, adjacent film support structures are separated by a distance such that when polymeric melt 46 flows through bundle assembly 10, during steady state operation, the first portion 74 and the second portion 78 of the polymeric melt each independently have a thickness of preferably at least 10% of the distance between adjacent film support structures.

The film generator is any device that can be used to uniformly subdivide the polymer flow onto the film support structures. Arrays of rods, bars, pipes, half-pipes and angles can be easily arranged to form film generators for planar film support structures that are parallel. For more complex film support structures, a film generator can be formed from a plate by adding arrays of appropriately positioned openings. With reference to Figures 3A and 3B, schematics for some of the design variations that may be used for film generators 14, 32, 34, 36 are provided. In Figure 3A, film generator 100 uses half pipes 102 which are separated by distance d₁ to form gaps 104. The subsequent film support structures 106 are separated by horizontal distance d₂ and are positioned to be aligned with the center of gaps 104. Moreover, film support structures 106 are a vertical distance d₃ below the bottom of film generators 100. The alignment of the center of the gaps 104 with the subsequent film support structures 106 ensures that both sides 112, 114 are coated with polymer melt 46. In another variation shown in Figure 3B, film generator 120 includes equal leg angles for the film generator 122 which are separated by distance d₄ to form gaps 124. The subsequent film support structures 126 are separated by horizontal distance d₅ and are positioned to align with gaps 124. Moreover, film support structures 126 are a vertical distance d₆ below the bottom of film generators 120. Again, the alignment of gaps 124 and film support structures 126 ensures that both sides 132, 134 are coated with polymer melt 46. Typically, distances d₁ and d₄ will be from about 0.25 (corresponding to about 6.35 mm) to about 2 inches (corresponding to about 50.8 mm) distances and d₅ will be from about 0.5 (corresponding to about 12.7 mm) to about 10 inches (corresponding to about 254 mm), and distances d₃ and d₆ will be from about 0 to about 2 inches (corresponding to about 50.8 mm). Preferably, distances d₂ and d₅ will be from about 0.75 (corresponding to about 19.05 mm) to about 3 inches (corresponding to about 76.2 mm). In other variations, the film support structure alternatively can pass completely through the gaps 104, 124. The configuration of the film generator can be adapted to feed a single stream to both sides of the film support structure, or to feed two separate streams, one flowing to each side of the film support structure.

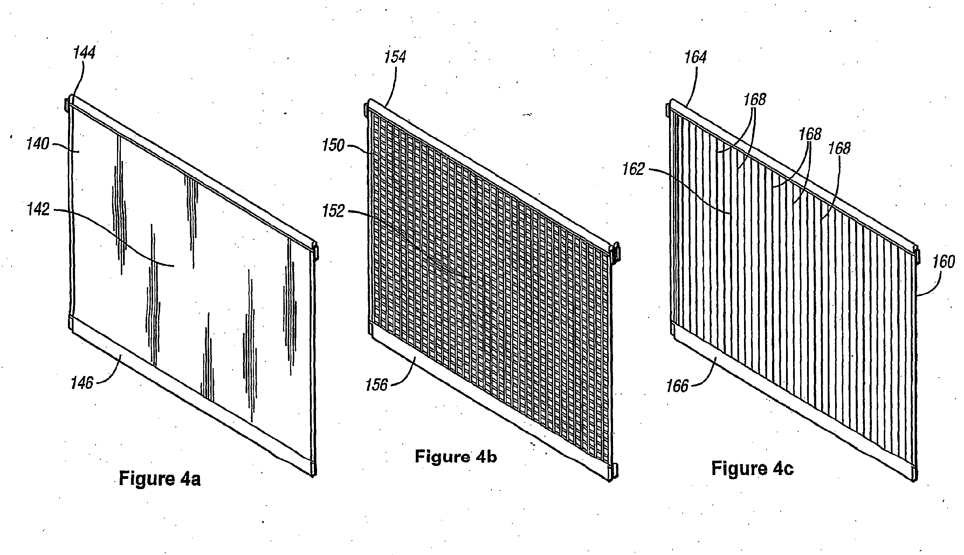

With reference to Figures 4A, 4B, and 4C a perspective view of some of the various types of film support structures 38-44 that can be used in the bundle assembly 10 is provided. Figure 4A provides a perspective view of a framed solid flat plate used in one variation for the film support structures 38-44. In this variation, film support structure 140 includes solid plate section 142 and frame sections 144, 146. Frame sections 144, 146 assist in the placement of the framed film support structures into a support rack and add mechanical strength to maintain the shape and position of the film support structure. Figure 4B provides a perspective view of a foraminous film support structure that comprises a framed mesh that may be used in a variation of film support structures 38-44. In this variation, film support structure 150 includes mesh section 152 and frame sections 154, 156. Any mesh style may be used for mesh section 152 (i.e., wire cloth or fabric, meshed screening, perforated metal or expanded metal sheet). Typically, the openings in the foraminous film support structure will range from 0.25 (corresponding to about 6.35 mm) to 3 inches (corresponding to about 76.2 mm). Figure 4C provides a perspective view of a framed set of substantially vertical wires that may be used in another variation of film support structures 38-44. In this variation, film support structure 160 includes wire film support structure section 162 and frame sections 164, 166. Wire film support structure section 162 is formed by a set of substantially coplanar and substantially parallel wires 168. Wire diameters typically are from about 0.010 (corresponding to about 0.254 mm) to about 0.125 inches (corresponding to about 3.175 mm) with spacing between the wires from about 0.25 (corresponding to about 6.35 mm) to about 2.0 inches (corresponding to about 50.8 mm). Although wires are referred to, rods or tubes can be used as well, and, a circular cross-section is not a necessity.

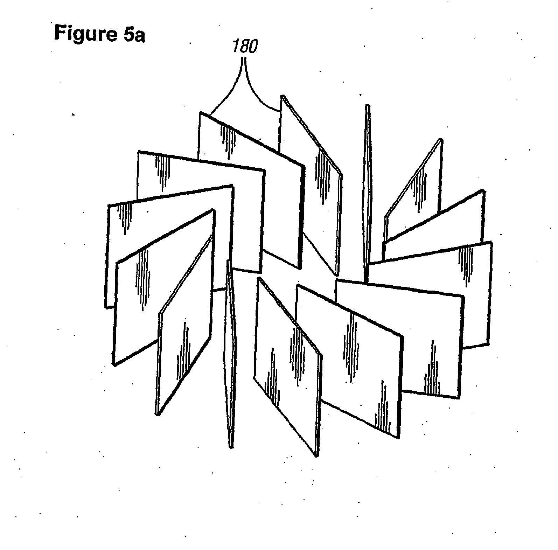

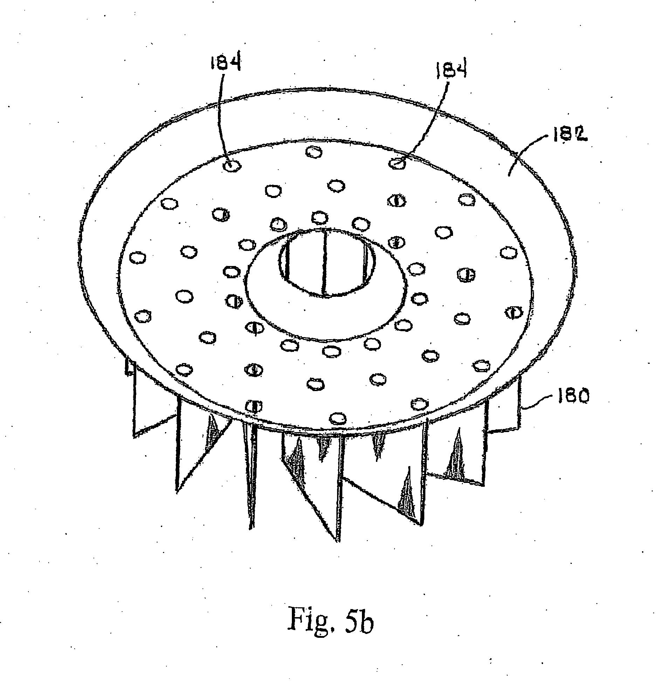

With reference to Figures 5A and 5B, an example of an alternative to the parallel arrangement of the film support structures of Figure 1 is provided. In this embodiment, the film support structures are arranged in a non-parallel configuration. Figure 5A provides a perspective view demonstrating the use of planar film support structures 180 arranged about a vertical line using equal angular spacing between adjacent film support structures. Figure 5B provides a perspective view of film generator 182 placed over the angularly displaced film support structures of Figure 5A. Film generator 182 includes an array of openings 184 positioned to introduce polymer melt onto the surfaces of the planar film support structures.

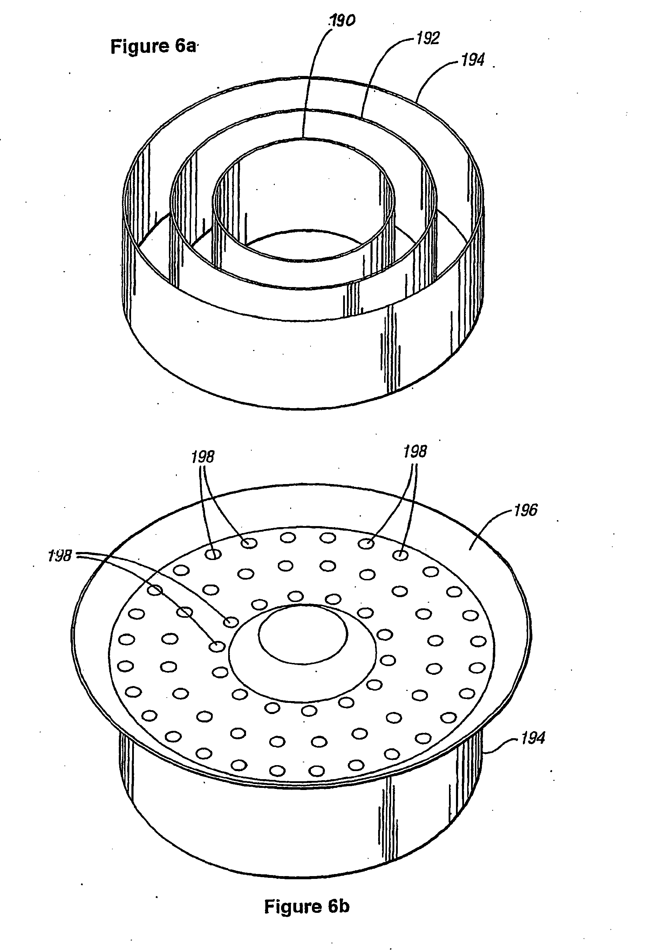

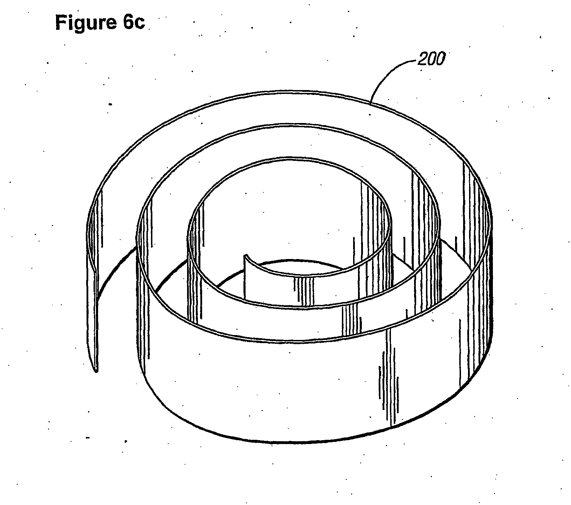

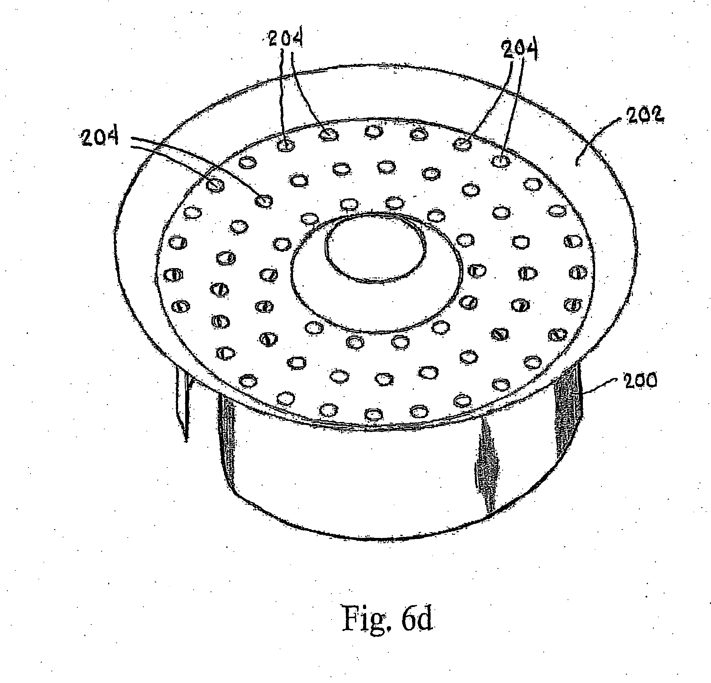

With reference to Figures 6A, 6B, 6C, and 6D, examples of alternatives to the planar surfaces used for the film support structures of Figure 1 are provided. Figure 6A provides a perspective view demonstrating the use of film support structures in the form of concentric cylinders 190, 192, 194. Figure 6B provides a perspective view of film generator 196 placed over the concentric cylinders of Figure 6A. Film generator 196 includes an array of openings 198 positioned to introduce polymer melt onto the cylindrical film support structures. Similarly, Figure 6C provides a perspective view of a spiraling film support structure 200, while Figure 6D provides a perspective view of film generator 202 positioned over the spiraling film support structure 200. Again, film generator 202 includes an array of openings 204 positioned to introduce polymer melt onto the surface of the spiraling film support structure 200. It should also be appreciated that discontinuities or gaps in the film support structures of Figures 6A-D are also contemplated as being within the scope of the invention.

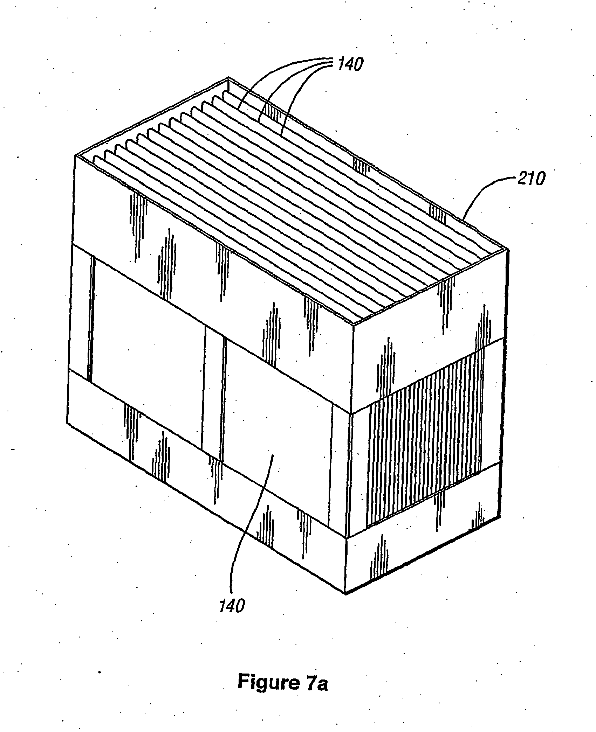

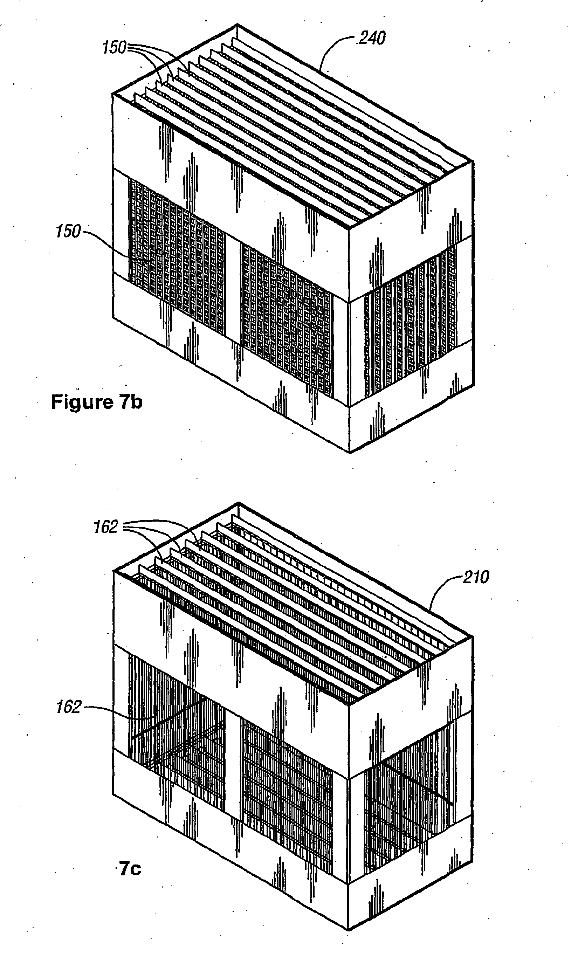

The various components of the bundle assembly of the invention are advantageously modular in nature for simplicity in assembly. With reference to Figures 7A, 7B, and 7C perspective views of a support rack 210 holding some of the various planar film support structures described in the present invention are provided. Figure 7A illustrates a support rack 210 holding framed solid flat plate film support structures 140. Figure 7B illustrates a support rack 210 holding framed mesh film support structures 150. Finally, Figure 7C illustrates a support rack 210 holding framed wire film support structures 162. It should be appreciated that the support rack 210 can hold any desired combination of framed solid plate film support structures 140, framed mesh film support structures 150, and framed wire film support structures 162. In the typical application, rack 210 will hold only one type of film support structure.

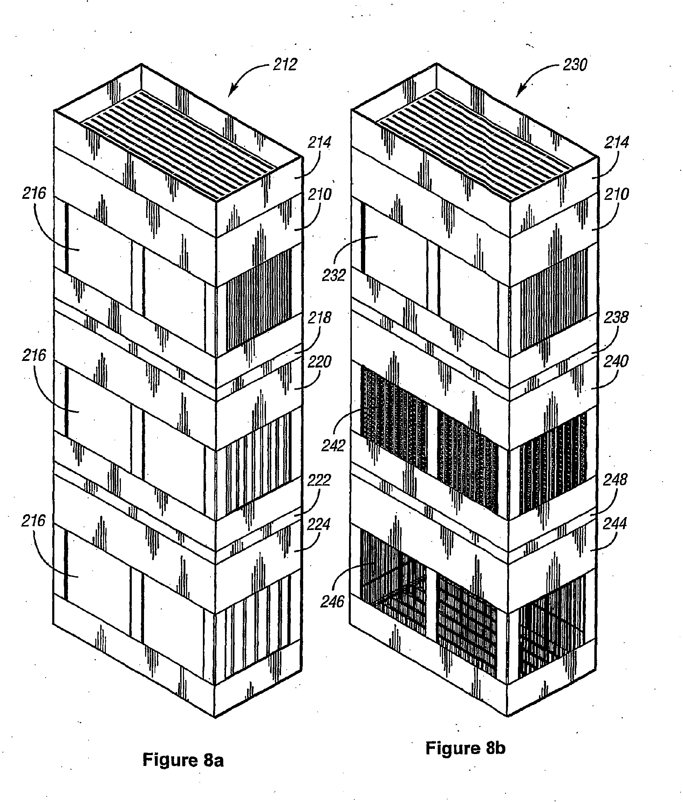

It should also be appreciated that a plurality of film generators and arrays of film support structures may be stacked to provide a longer flow path for the polymer melt. With reference to Figures 8A and 8B, perspective views are given in which film generators and film support structures in racks are stacked to form a bundle assembly. Figure 8A is a perspective view illustrating a bundle with each support rack holding a row of the same type of film support structures. Bundle 212 includes inlet film generator 214. Inlet film generator 214 is positioned above rack 210 that holds an array of film support structures 216. Rack 210 is positioned above intermediate film generator 218 that includes the film generators set forth above. Intermediate film generator 218 is positioned above rack 220 that holds a second array of film support structures 216. Again, rack 220 is positioned above intermediate film generator 222 that is in turn positioned above rack 224. Although the present example provides a bundle assembly with three racks, it should be appreciated that an arbitrary number of support racks may be utilized. Moreover, although this example utilizes a set of film support structures 216 which are all solid plate of the same type, combinations of different types of film support structures (i.e., solid, mesh, or wire) can be used. Figure 8B is a perspective view illustrating a bundle with each rack (row) of film support structures utilizing a different type of film support structure. In this variation, the bundle 230 includes inlet film generator 214. Inlet film generator 214 is positioned above rack 210 that holds an array of film support structures 232. Film support structures 232 are framed solid flat plate film support structures. Rack 210 is positioned above intermediate film generator 238 that includes the film generators set forth above. Intermediate film generator 238 is positioned above rack 240 which holds a second array of film support structures 242. Film support structures 242 are framed mesh film support structures. Again, rack 240 is positioned above intermediate film generator 248 that is in turn positioned above rack 244. Rack 244 hold a third array of film support structures 246 which are framed wire film support structures.

Although the majority of the examples show three film generators, the actual number required depends on a number of factors. Intermediate film generators are often useful in changing the number of film support structures in successive rows. In order to achieve efficient space utilization, the horizontal spacing within a row of film support structures can be adapted to the melt viscosity of the liquid (i.e., polymer melt). Thus, as the viscosity increases from the top to the bottom of the reactor, the minimum horizontal spacing increases between the adjacent film support structures. Typically as a result, the number of film support structures in a row decreases. Intermediate film generators also facilitate changing the orientation of the film support structures, for example, having the film support structures in successive rows rotated 90 degrees about the reactor centerline.

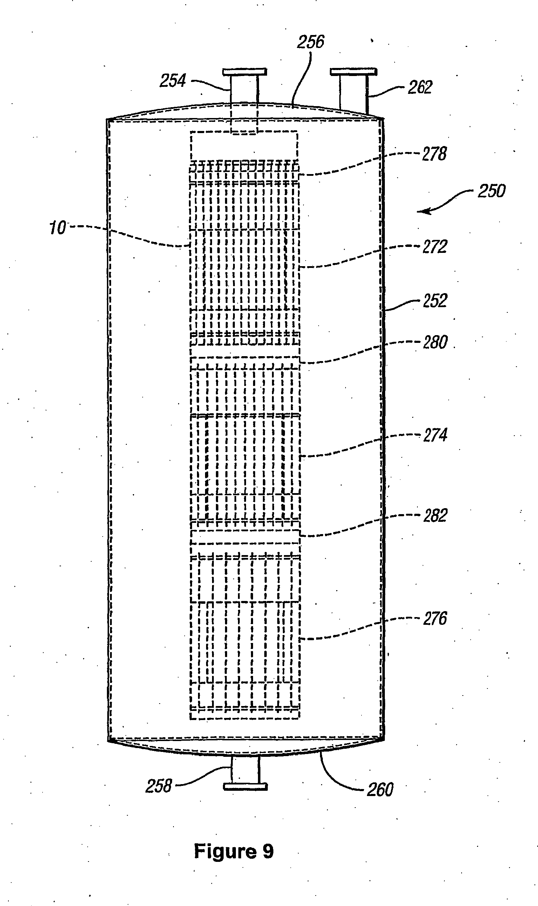

In another embodiment of the present invention, a polymerization reactor that utilizes the bundle assembly set forth above is provided. With reference to Figure 9, polymerization reactor 250 includes bundle assembly 10 and vertically disposed containment 252. Polymeric melt inlet 254 is attached near the top 256 of vertically disposed containment 252 and polymeric melt outlet 258 is attached near the bottom 260 of outer shell 252. Moreover, polymerization reactor 250 also includes vapor outlet 262 attached to outer shell 252. Finally, the polymerization reactor 250 includes bundle assembly 10 that receives the polymeric melt from polymeric melt inlet and transfers the polymeric melt to the polymeric melt outlet, as set forth above. Polymerization reactor 250 also includes a heater (not shown) for maintaining polymer melt in a fluid state and a vacuum pump (not shown) for reducing the pressure inside the polymerization reactor. The vacuum pump will typically act through vapor outlet 262. Specifically, the bundle assembly 10 includes arrays of film support structures 272, 274, 276 and film generators 278, 280 and 282. In another variation of this embodiment, film support structures may be placed side by side in addition to or in place of the stacked arrangement illustrated in Figure 9 for film support structures 272, 274, 276. Finally, the operation of the bundle assembly is the same as that set forth above.

The film support structures are mounted in the vessel to provide retention of the polymer melts, thereby increasing liquid residence time within the reactor and its exposure to the reaction conditions. The liquid residence time is required to allow sufficient time for the polymerization kinetics to keep up with the enhanced byproduct liberation rates achieved by the increase in the liquid-vapor surface area and the enhancement of its renewal. Not only does this design provide more free surface area for vapor to leave the polymer, but it also provides more parallel flow paths so that the thickness of the films are reduced when compared to the prior art such as roof-and-trough trays.

In yet another embodiment of the invention, a method of increasing the degree of polymerization in a polymeric melt using the bundle assembly set forth above is provided. The method of the invention comprises introducing the polymeric melt into a bundle assembly at a sufficient temperature and pressure. The details of the bundle assembly are set forth above. The method of this embodiment comprises contacting the highest film generator and then the highest positioned row of film support structures with the polymeric melt. Next, the optional intermediate film generators and rows of film support structures are contacted with the polymeric melt. Finally, the lowest positioned row of film support structures is contacted with the polymeric melt. After passing over the lowest positioned row of film support structures, the polymeric melt falls from the bundle assembly. The polymeric melt removed from the bundle assembly advantageously has a higher degree of polymerization than when the polymeric melt was introduced into the bundle assembly. In one variation of this embodiment, the reaction temperature is from about 250° C to about 320° C and the reaction pressure is from about 0.2 torr (corresponding to about 26.7 Pa) to about 30 torr (corresponding to about 4 kPa).

While em odiments of the invention have been illustrated and described, it is not intended that these embodiments illustrate and describe all possible forms of the invention. Rather, the words used in the specification are words of description rather than limitation, and it is understood that various changes may be made without departing from the scope of the invention.

## Claims

1. A vertically disposed polymerization reactor (250) for polymerizing a polymer melt comprising a bundle assembly (10) of internal components, the bundle assembly (10) comprising:
- a first stationary array (24) of one or more film support structures (38; 106; 126; 140; 150; 160, 162; 180; 190, 192, 194; 200; 216; 232; 242; 246; 272, 274, 276) oriented to have successive horizontally-spaced surfaces with consistent clearance, wherein each film support structure is positioned relative to the horizontal plane with an angle greater than or equal to about 60 degrees, and wherein each film support structure has a first side (76) and a second side (80),
- one or more additional stationary arrays (24) of one or more film support structures, the additional stationary arrays each being arranged into one or more additional vertically arranged rows, each row having horizontally-spaced film support structures positioned at equal elevation, wherein the additional arrays include a lowest stationary array such that the bundle assembly is adapted to allow the polymer melt to flow from the first stationary array to the lowest stationary array,
and
- one or more stationary film generators (14, 32, 34, 36; 100; 102; 120; 122; 182; 196; 202; 214, 218, 222, 238, 248; 278, 280, 282) positioned above a corresponding stationary array of the stationary arrays of one or more film support structures,
wherein
- the flow of polymer melt (46) inside the reactor (250) is gravity driven,
- the one or more film generators are positioned completely above the corresponding array of one or more film support structures,
- the one or more film generators subdivide and direct the polymer melt (46) onto the one or more film support structures through at least one opening (104; 124; 184; 198; 204) arranged above and in alignment with a subsequent film support structure, such that when a polymer melt (46) flows through the at least one opening (104; 124; 184; 198; 204) a first portion (74) of the subdivided polymer melt is directed to flow over the first side (76) of the subsequent film support structure and a second portion (78) of the subdivided polymer melt is directed to flow over the second side (80) of the subsequent film support structure.

2. The reactor of claim 1 wherein the surfaces are substantially parallel.

3. The reactor of claim 1 wherein each film support structure is positioned relative to the horizontal plane with an angle greater than about 80 degrees, the array of film support structures being arranged to form one or more rows, each row having horizontally-spaced film support structures positioned at equal elevation.

4. The reactor of claim 1 wherein each film support structure of the array of film support structures comprises a solid plate.

5. The reactor of claim 1 wherein each film support structure of the array of film support structures comprises a foraminous film support structure.

6. The reactor of claim 5 wherein each foraminous film support structure of the array of film support structures is composed of wire cloth or fabric, meshed screening, perforated metal, or expanded metal sheet.

7. The reactor of claim 6 wherein the foraminous film support structure has openings from about 0.25 inches (corresponding to about 6.35 mm) to about 3 inches (corresponding to about 76.2 mm).

8. The reactor of claim 1 wherein each film support structure of the array of film support structures comprises a set of substantially vertical and substantially parallel wires, rods, or tubes.

9. The reactor of claim 1 wherein the horizontally-spaced distance between adjacent film support structures of the array of film support structures is such that when the polymeric melt flows through the bundle assembly, during steady state operation, each of the subdivided and independent polymeric melt streams has a thickness of at least 10% of the distance between each film support structure.

10. The reactor of claim 1 wherein each film support structure of the array of film support structures is separated from a horizontally-adjacent film support structure by a distance from about 0.5 inch (corresponding to about 12.7 mm) to about 10 inches (corresponding to about 254 mm).

11. The reactor of claim 1 wherein the polymeric melt film generator creates one or more polymeric streams for each film support structure making up the array of film support structures immediately beneath the film generator.

12. The reactor of claim 1 wherein the one or more support structures comprise a component selected from the group consisting of structures having the shape of cylinders, structures having the shape of a spiral, and structures with substantially vertical but non-parallel surfaces.

13. A method of increasing the degree of polymerization in a polymeric melt (46), the method comprising:
a) introducing the polymeric melt (46) into the bundle assembly (10) of the reactor (250) of claim 1 at a sufficient temperature and pressure for polymerization of the polymer melt (46);
b) exposing the resulting free surfaces (74, 78) of the polymer melt to the atmosphere of the reactor (250); and
c) removing the polymeric melt from the bundle assembly (10) wherein the polymeric melt removed from the bundle assembly (10) has a higher degree of polymerization than when the polymeric melt (46) was introduced into the bundle assembly (10).

14. The method of claim 13 wherein the temperature is from about 250° C to about 320° C.

15. The method of claim 13 wherein the pressure is from about 0.2 torr (corresponding to about 26.7 Pa) to about 30 torr (corresponding to about 4 kPa).

16. The method of claim 13 wherein each film support structure in an array of film support structures comprises a solid plate.

17. The method of claim 13 wherein each film support structure in an array of film support structures comprises a foraminous film support structure.

18. The method of claim 17 wherein each film support structure in an array of film support structures is composed of wire cloth or fabric, meshed screening, perforated metal or expanded metal sheet.

19. The method of claim 18 wherein the foraminous film support structure has openings from about 0.25 inches (corresponding to about 6.35 mm) to about 3 inches (corresponding to about 76.2 mm).

20. The method of claim 13 wherein each film support structure in an array of film support structures comprises a set of substantially vertical and substantially parallel wires, rods, or tubes.

## Patentansprüche

1. Vertikal angeordneter Polymerisationsreaktor (250) zum Polymerisieren einer Polymerschmelze, mit einer Bündelanordnung (10) von Einbauten, wobei die Bündelanordung (10) umfasst:
- eine erste stationäre Anordnung (24) einer oder mehrerer Filmtragstrukturen (38; 106; 126; 140, 150, 160; 162; 180; 190, 192, 194; 200; 216; 232; 242; 246; 272, 274, 276), die ausgerichtet sind zur Ausbildung aufeinanderfolgender, horizontal beabstandeter Flächen mit durchgängigem Abstand, wobei jede Filmtragstruktur bezüglich der horizontalen Ebene unter einem Winkel von etwa 60 Grad oder mehr angeordnet ist, und wobei jede Filmtragstruktur eine erste Seite (76) und eine zweite Seite (80) aufweist,
- eine oder mehrere zusätzliche stationäre Anordnungen (24) einer oder mehrerer Filmtragstrukturen, wobei die zusätzlichen stationären Anordnungen jeweils in einer oder mehreren zusätzlichen vertikalen Reihen angeordnet sind, wobei jede Reihe horizontal beabstandete, auf gleicher Höhe angeordnete Filmtragstrukturen aufweist, wobei die zusätzlichen Anordnungen eine unterste stationäre Anordnung umfassen, derart, dass die Bündelanordnung ein Fließen der Polymerschmelze von der ersten stationären Anordnung zur untersten stationären Anordnung zu ermöglichen vermag, und
- einen oder mehrere stationäre Filmgeber (14, 32, 34, 36; 100; 102; 120; 122; 182; 196; 202; 214, 218, 222, 238, 248; 278, 280, 282), die oberhalb einer zugehörigen, stationären Anordnung der stationären Anordnungen einer oder mehrerer Filmtragstrukturen angeordnet sind,
wobei
- das Fließen der Polymerschmelze (46) innerhalb des Reaktors (250) gravitationsgetrieben ist,
- der eine oder die mehreren Filmgeber vollständig oberhalb der zugehörigen Anordnung der einen oder mehreren Filmtragstrukturen angeordnet sind,
- der eine oder die mehreren Filmgeber die Polymerschmelze (46) unterteilen und auf die eine oder die mehreren Filmtragstrukturen richten durch zumindest eine Öffnung (104; 124; 184; 198; 204), die oberhalb und in Ausrichtung mit einer nachfolgenden Filmtragstruktur angeordnet ist, so dass dann, wenn eine Polymerschmelze (46) durch die zumindest eine Öffnung (104; 124; 184; 198; 204) fließt, ein erster Anteil (74) der unterteilten Polymerschmelze zum Fließen über die erste Seite (76) der nachfolgenden Filmtragstruktur geleitet wird und ein zweiter Anteil (78) der unterteilten Polymerschmelze zum Fließen über die zweite Seite (80) der nachfolgenden Filmtragstruktur geleitet wird.

2. Reaktor nach Anspruch 1, bei dem die Flächen im Wesentlichen parallel sind.

3. Reaktor nach Anspruch 1, bei dem jede Filmtragstruktur bezüglich der horizontalen Ebene unter einem Winkel größer als etwa 80 Grad angeordnet ist, wobei die Anordnung der Filmtragstrukturen zur Ausbildung einer oder mehrerer Reihen angeordnet ist und jede Reihe horizontal beabstandete, auf gleicher Höhe angeordnete Filmtragstrukturen aufweist.

4. Reaktor nach Anspruch 1, bei dem jede Filmtragstruktur der Filmtragstrukturenanordnung eine massive Platte aufweist.

5. Reaktor nach Anspruch 1, bei dem jede Filmtragstruktur der Filmtragstrukturenanordnung eine Filmtragstruktur mit Durchgangsöffnungen aufweist.

6. Reaktor nach Anspruch 5, bei dem jede Filmtragstruktur mit Durchgangsöffnungen der Filmtragstrukturenanordnung ein Drahtgewebe oder eine Drahtstruktur, ein Siebnetz, ein perforiertes Metall oder ein Streckblech umfasst.

7. Reaktor nach Anspruch 6, bei dem die Filmtragstruktur mit Durchgangsöffnungen Öffnungen von etwa 0,25 Zoll (entsprechend etwa 6,35 mm) bis etwa 3 Zoll (entsprechend etwa 76,2 mm) aufweist.

8. Reaktor nach Anspruch 1, bei dem jede Filmtragstruktur der Filmtragstrukturenanordnung einen Satz von im Wesentlichen vertikalen und im Wesentlichen parallelen Drähten, Stäben oder Röhren umfasst.

9. Reaktor nach Anspruch 1, bei dem der horizontale Abstand zwischen benachbarten Filmtragstrukturen der Filmtragstrukturenanordnung so ist, dass wenn die Polymerschmelze in einem stationären Betriebszustand durch die Bündelanordnung fließt, jeder der unterteilten und unabhängigen Polymerschmelzströme eine Dicke von zumindest 10% des Abstands zwischen jeder Filmtragstruktur hat.

10. Reaktor nach Anspruch 1, bei dem jede Filmtragstruktur der Filmtragstrukturenanordnung von einer horizontal benachbarten Filmtragstruktur durch einen Abstand von etwa 0,5 Zoll (entsprechend etwa 12,7 mm) bis etwa 10 Zoll (entsprechend etwa 254 mm) getrennt ist.

11. Reaktor nach Anspruch 1, bei dem der Filmgeber der Polymerschmelze für jede die Filmtragstrukturenanordnung ausbildende Filmtragstruktur unmittelbar unterhalb des Filmgebers einen oder mehrere Polymerströme erzeugt.

12. Reaktor nach Anspruch 1, bei dem die eine oder die mehreren Filmtragstrukturen eine Komponente umfassen, die ausgewählt ist aus der Gruppe bestehend aus zylindrischen Strukturen, spiralförmigen Strukturen oder Strukturen mit im Wesentlichen vertikalen, jedoch nicht parallelen Flächen.

13. Verfahren zum Erhöhen eines Polymerisationsgrads in einer Polymerschmelze (46), wobei das Verfahren umfasst:
a) Einbringen der Polymerschmelze (46) in die Bündelanordnung (10) des Reaktors (250) nach Anspruch 1 bei einer hinreichenden Temperatur und hinreichendem Druck zur Polymerisation der Polymerschmelze (46);
b) Aussetzen der resultierenden freien Oberflächen (74, 78) der Polymerschmelze der Atmosphäre des Reaktors (52); und
c) Entnehmen der Polymerschmelze aus der Bündelanordnung (10), wobei die aus der Bündelanordnung (10) entnommene Polymerschmelze einen höheren Polymerisationsgrad aufweist als die Polymerschmelze (46) beim Einbringen in die Bündelanordnung (10).

14. Verfahren nach Anspruch 13, bei dem die Temperatur im Bereich von etwa 250 °C bis etwa 320 °C liegt.

15. Verfahren nach Anspruch 13, bei dem der Druck im Bereich von etwa 0,2 Torr (entsprechend etwa 26,7 Pa) bis etwa 30 Torr (entsprechend etwa 4 kPa) liegt.

16. Verfahren nach Anspruch 13, bei dem jede Filmtragstruktur einer Filmtragstrukturenanordnung eine massive Platte aufweist.

17. Verfahren nach Anspruch 13, bei dem jede Filmtragstruktur einer Filmtragstrukturenanordnung eine Filmtragstruktur mit Durchgangsöffnungen umfasst.

18. Verfahren nach Anspruch 17, bei dem jede Filmtragstruktur mit Durchgangsöffnungen einer Filmtragstrukturenanordnung ein Drahtgewebe oder eine Drahtstruktur, ein Siebnetz, ein perforiertes Metall oder ein Streckblech umfasst.

19. Verfahren nach Anspruch 18, bei dem die Filmtragstruktur mit Durchgangsöffnungen Öffnungen von etwa 0,25 Zoll (entsprechend etwa 6,35 mm) bis etwa 3 Zoll (entsprechend etwa 76,2 mm) aufweist.

20. Verfahren nach Anspruch 13, bei dem jede Filmtragstruktur einer Filmtragstrukturenanordnung einen Satz von im Wesentlichen vertikalen und im Wesentlichen parallelen Drähten, Stäben oder Röhren umfasst.

## Revendications

1. Réacteur (250) de polymérisation disposé verticalement pour polymériser une masse fondue de polymère comprenant un ensemble groupé (10) de composants internes, l'ensemble groupé (10) comprenant :
- une première matrice (24) fixe d'une ou plusieurs structures (38 ; 106 ; 126 ; 140 ; 150 ; 160, 162 ; 180 ; 190, 192, 194 ; 200 ; 216 ; 232 ; 242 ; 246 ; 272, 274, 276) de support de film orientées de façon à avoir des surfaces successives espacées horizontalement avec un intervalle constant, dans lequel chaque structure de support de film est positionnée par rapport au plan horizontal avec un angle supérieur ou égal à environ 60 degrés, et dans lequel chaque structure de support de film a un premier côté (76) et un deuxième côté (80),
- une ou plusieurs matrices (24) fixes additionnelles d'une ou plusieurs structures de support de film, les matrices fixes additionnelles étant chacune agencées en une ou plusieurs rangées additionnelles agencées verticalement, chaque rangée ayant des structures de support de film espacées horizontalement positionnées à hauteur égale, dans lequel les matrices additionnelles incluent une matrice fixe la plus inférieure, de sorte que l'ensemble groupé est adapté à permettre que la masse fondue de polymère s'écoule de la première matrice fixe jusqu'à la matrice fixe la plus inférieure, et
- un ou plusieurs générateurs (14, 32, 34, 36 ; 100 ; 102 ; 120 ; 122 ; 182 ; 196 ; 202 ; 214, 218, 222, 238, 248 ; 278, 280, 282) fixes de film positionnés au-dessus d'une matrice fixe correspondante parmi les matrices fixes d'une ou plusieurs structures de support de film,
dans lequel
- l'écoulement de masse fondue de polymère (46) à l'intérieur du réacteur (250) est entraîné par gravité,
- le ou les générateurs de film sont positionnés complètement au-dessus de la matrice correspondante d'une ou plusieurs structures de support de film,
- le ou les générateurs de film subdivisent et dirigent la masse fondue de polymère (46) sur la ou les structures de support de film à travers au moins une ouverture (104 ; 124 ; 184 ; 198 ; 204) agencée au-dessus d'une et en alignement avec une structure de support de film suivante, de telle sorte que, lorsqu'une masse fondue de polymère (46) s'écoule à travers l'au moins une ouverture (104 ; 124 ; 184 ; 198 ; 204), une première partie (74) de la masse fondue de polymère subdivisée est dirigée de façon à s'écouler sur le premier côté (76) de la structure de support de film suivante et une deuxième partie (78) de la masse fondue de polymère subdivisée est dirigée de façon à s'écouler sur le deuxième côté (80) de la structure de support de film suivante.

2. Réacteur selon la revendication 1, dans lequel les surfaces sont sensiblement parallèles.

3. Réacteur selon la revendication 1, dans lequel chaque structure de support de film est positionnée par rapport au plan horizontal avec un angle supérieur à environ 80 degrés, la matrice de structures de support de film étant agencée de façon à former une ou plusieurs rangées, chaque rangée ayant des structures de support de film espacées horizontalement positionnées à hauteur égale.

4. Réacteur selon la revendication 1, dans lequel chaque structure de support de film de la matrice de structures de support de film comprend une plaque pleine.

5. Réacteur selon la revendication 1, dans lequel chaque structure de support de film de la matrice de structures de support de film comprend une structure de support de film foraminée.

6. Réacteur selon la revendication 5, dans lequel chaque structure de support de film foraminée de la matrice de structures de support de film est composée d'une toile ou étoffe métallique, d'un tamis maillé, d'un métal perforé, ou d'une feuille de métal déployé.

7. Réacteur selon la revendication 6, dans lequel la structure de support de film foraminée a des ouvertures d'environ 0,25 pouce (correspondant à environ 6,35 mm) à environ 3 pouces (correspondant à environ 76,2 mm).

8. Réacteur selon la revendication 1, dans lequel chaque structure de support de film de la matrice de structures de support de film comprend un ensemble de fils, tiges, ou tubes sensiblement verticaux/verticales et sensiblement parallèles.

9. Réacteur selon la revendication 1, dans lequel la distance horizontalement séparée entre structures de support de film adjacentes de la matrice de structures de support de film est telle que, lorsque la masse fondue polymérique s'écoule à travers l'ensemble groupé, lors d'un fonctionnement à régime continu, chacun des courants subdivisés et indépendants de masse fondue polymérique a une épaisseur d'au moins 10 % de la distance entre chaque structure de support de film.

10. Réacteur selon la revendication 1, dans lequel chaque structure de support de film de la matrice de structures de support de film est séparée d'une structure de support de film horizontalement adjacente d'une distance d'environ 0,5 pouce (correspondant à environ 12,7 mm) à environ 10 pouces (correspondant à environ 254 mm).

11. Réacteur selon la revendication 1, dans lequel le générateur de film de masse fondue polymérique crée un ou plusieurs courants polymériques pour chaque structure de support de film constituant la matrice de structures de support de film immédiatement en-dessous du générateur de film.

12. Réacteur selon la revendication 1, dans lequel la ou les structures de support comprend/comprennent un composant choisi parmi le groupe consistant en des structures ayant la forme de cylindres, des structures ayant la forme d'une spirale, et des structures avec des surfaces sensiblement verticales mais non parallèles.

13. Procédé d'augmentation du degré de polymérisation d'une masse fondue polymérique (46), le procédé comprenant :
a) l'introduction de la masse fondue polymérique (46) dans l'ensemble groupé (10) du réacteur (250) selon la revendication 1 à une température et une pression suffisantes pour une polymérisation de la masse fondue de polymère (46) ;
b) l'exposition des surfaces (76, 78) libres résultantes de la masse fondue de polymère à l'atmosphère du réacteur (250) ; et
c) la sortie de la masse fondue polymérique de l'ensemble groupé (10), dans lequel la masse fondue polymérique sortie de l'ensemble groupé (10) a un degré de polymérisation plus élevé que lorsque la masse fondue polymérique (46) a été introduite dans l'ensemble groupé (10).

14. Procédé selon la revendication 13, dans lequel la température est d'environ 250 °C à environ 320 °C.

15. Procédé selon la revendication 13, dans lequel la pression est d'environ 0,2 torr (correspondant à environ 26,7 Pa) à environ 30 torr (correspondant à environ 4 kPa).

16. Procédé selon la revendication 13, dans lequel chaque structure de support de film dans une matrice de structures de support de film comprend une plaque pleine.

17. Procédé selon la revendication 13, dans lequel chaque structure de support de film dans une matrice de structures de support de film comprend une structure de support de film foraminée.

18. Procédé selon la revendication 17, dans lequel chaque structure de support de film dans une matrice de structures de support de film est composée d'une toile ou étoffe métallique, d'un tamis maillé, d'un métal perforé, ou d'une feuille de métal déployé.

19. Procédé selon la revendication 18, dans lequel la structure de support de film foraminée a des ouvertures d'environ 0,25 pouce (correspondant à environ 6,35 mm) à environ 3 pouces (correspondant à environ 76,2 mm).

20. Procédé selon la revendication 13, dans lequel chaque structure de support de film dans une matrice de structures de support de film comprend un ensemble de fils, tiges, ou tubes sensiblement verticaux/verticales et sensiblement parallèles.
